(19) 

**Europäisches Patentamt**
**European Patent Office**
**Office européen des brevets**

(11) **EP 3 138 361 B1**

(12) **EUROPEAN PATENT SPECIFICATION**

(45) Date of publication and mention
of the grant of the patent:
**14.06.2023 Bulletin 2023/24**

(21) Application number: **15786391.1**

(22) Date of filing: **28.04.2015**

(51) International Patent Classification (IPC):
**H04W 72/0453** $^{(2023.01)}$

(52) Cooperative Patent Classification (CPC):
**H04W 72/0453**

(86) International application number:
**PCT/JP2015/002278**

(87) International publication number:
**WO 2015/166661 (05.11.2015 Gazette 2015/44)**

(54) **A MECHANISM OF RESOURCE-POOL CONFIGURATIONS FOR DEVICE-TO-DEVICE COMMUNICATION**

MECHANISMUS FÜR RESSOURCENPOOLKONFIGURATIONEN FÜR KOMMUNIKATION VON VORRICHTUNG ZU VORRICHTUNG

MÉCANISME DE CONFIGURATIONS DE GROUPE DE RESSOURCES POUR UNE COMMUNICATION DE DISPOSITIF À DISPOSITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.05.2014 US 201461987694 P**

(43) Date of publication of application:
**08.03.2017 Bulletin 2017/10**

(73) Proprietor: **Sharp Kabushiki Kaisha**
**Sakai City, Osaka 590-8522 (JP)**

(72) Inventor: **WEI, Xusheng**
**Berkshire RG12 7QY (GB)**

(74) Representative: **Müller Hoffmann & Partner**
**Patentanwälte mbB**
**St.-Martin-Strasse 58**
**81541 München (DE)**

(56) References cited:
**EP-B1- 3 120 641        WO-A1-2014/022776**
**WO-A1-2015/143170**

- **INTERDIGITAL COMMUNICATIONS: "Mode Selection and Resource Pool Selection for D2D UEs", 3GPP DRAFT; R2-141695 MODE SELECTION AND RESOURCE POOL SELECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG2, no. Valencia, SP; 20140331 - 20140404 22 March 2014 (2014-03-22), XP050817916, Retrieved from the Internet: URL:http://www.3gpp.org/ftp/tsg_ran/WG2_RL 2/TSGR2_85bis/Docs/ [retrieved on 2014-03-22]**
- **ZTE CORPORATION: "Resource pools for D2D communication", 3GPP DRAFT; R2-141483 - RESOURCE POOLS FOR D2D COMMUNICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Valencia; 20140331 - 20140404 22 March 2014 (2014-03-22), XP050792653, Retrieved from the Internet: URL:http://www.3gpp.org/ftp/Meetings_3GPP_ SYNC/RAN2/Docs/ [retrieved on 2014-03-22]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- ETRI: "Resource allocation for D2D discovery", 3GPP DRAFT; R1-140852, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20140210 - 20140214 17 February 2014 (2014-02-17), XP050770719, Retrieved from the Internet: URL:http://www.3gpp.org/ftp/tsg_ran/WG1_RL1/TSGR1_76/Docs/ [retrieved on 2014-02-17]
- ZTE CORPORATION: 'Resource pools for D2D communication' 3GPP TSG-RAN WG2 MEETING #85BIS R2-141483, 3GPP 31 March 2014, XP050792653
- 'Resource pool structure' 3GPP TSG-RAN WG2 #85BIS R2-141717, 3GPP 31 March 2014, XP050792844
- QUALCOMM INCORPORATED: 'Definitions of coverage states and mode switching for D2D Communication' 3GPP TSG-RAN WG2 #85 BIS R2-141683, 3GPP 31 March 2014, XP050792817
- 'Resource pool usage upon entering coverage' 3GPP TSG-RAN WG2 #85BIS R2-141718, 3GPP 31 March 2014, XP050792845
- ERICSSON ET AL.: 'D2D for LTE Proximity Services: Overview' 3GPP TSG-RAN WG1 #73 RL-132028, 3GPP 20 May 2013, XP050697812
- QUALCOMM INCORPORATED: "Definitions of coverage states and mode switching for D2D Communication", 3GPP DRAFT; R2-141683 QC_D2D_COVERAGE_MODE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Valencia, Spain; 20140331 - 20140404 22 March 2014 (2014-03-22), XP050792817, Retrieved from the Internet: URL:http://www.3gpp.org/ftp/Meetings_3GPP_SYNC/RAN2/Docs/ [retrieved on 2014-03-22]

## Description

## Technical Field

1. Field of the Invention

The present invention relates to resource-pool configurations used in device-to-device (D2D) communication, and more specifically, multiple resource-pool configurations that are usable in different deployment scenarios such as, for example, out-of-coverage and in-coverage D2D communication. The present invention also relates to multiple resource-pool configurations using different signaling methods that improve spectrum efficiency and robustness of the D2D communication.

## Background Art

2. Description of the Related Art

D2D communication is one of the key features of the 3rd Generation Partnership Project (3GPP), Release 12. Introducing D2D communication improves spectrum efficiency and overall throughput, reduces a terminal's power consumption, and enables new peer-to-peer services. Typical applications include, but are not limited to, public safety, network offloading, etc.

A User Equipment (UE) within the coverage of an Evolved Node B (eNB) will have normal Long-Term Evolution (LTE)/ LTE-Advanced (LTE-A) communication as well as D2D communication if it is configured for such communication and will use the uplink for D2D transmission. Using the uplink for D2D transmission creates a new challenge that has not been addressed in previous LTE/LTE-A designs. The new challenge is that the physical components for D2D communication are not always available since, to receive D2D transmissions, a UE needs to return its radio frequency (RF) chain from the downlink frequency to the uplink frequency. However, the UE cannot always keep the RF chain at the uplink frequency since normal LTE/LTE-A or wide area network (WAN) transmission requires an RF chain working at the downlink frequency. The RF chain can be considered as the transmission path (either a virtual or a real path) from the antenna port to the baseband processor/modem interface. That is, one RF chain is one complete set of independently controllable RF circuit resources (or other such assignable physical resource) from/to an antenna and a baseband modem interface.

For example, if a UE is considered to be 4x multi-input, multi-out (MIMO) (multi-antenna function) capable, then the UE has at least 4 RF chains in its circuit design. Therefore, because a UE's normal LTE/LTE-A or WAN (wide area network) transmission requires a RF chain working at the downlink frequency, a UE cannot have both simultaneous D2D transmission/reception and simultaneous LTE and D2D reception.

Thus, a resource pool, which includes a limited number of RF chains, needs to be configured for D2D communication. Physical layer resource allocation for D2D communication is limited within the resource pool, at least for out-of-coverage scenarios, to enable D2D-capable UEs to perform D2D reception and WAN communication simultaneously.

Resource-pool configurations have been studied and the following schemes have been identified for different scenarios:

    i. A pre-configured or fixed resource-pool configuration that is more suitable for out-of-coverage UEs
    ii. A semi-static configured resource-pool configuration that is more suitable for in-coverage UEs; and
    iii. A resource configuration which is controlled by a radio resource management head (RRMH). A typical, non-limiting example of RRMH is eNB, relay node, remote radio head (RRH), or a D2D-capable UE.

However, the above schemes each only solve some problems with D2D communication for different scenarios and only do so by sacrificing flexibility in other scenarios. Detailed designs for resource-pool configurations have not yet been decided. Thus, the question of how to use resource-pool configuration to realize D2D communication is still unanswered. That is, the above schemes have not provided updateable resource-pool configurations which are able to efficiently realize D2D communication for D2D-capable UEs which are going in and out of cell coverage, nor have the above schemes considered aligning resource-pool configurations of a group of UEs based on which ones of different cells the UEs are associated with.

Interdigital Communications: "Mode selection and resource pool selection for D2D UEs", 3GPP Draft; R2-141695 Mode selection and resource pool selection, 3rd Generation Partnership Project (3GPP), Mobile Competence Centre; 650, Route des Lucioles; F-06921 Sophia-Antipolis Cedex; France, vol. RAN WG2, no. Valencia, SP; 20140331 - 20140404 22 March 2014, XP050817916 is concerned with a discussion on the procedure of mode selection and resource selection requirements. It is FFS how the resource pool is configured/provided to UEs in or out of coverage (e.g. pre-configured; provided by eNB in SIB; forwarded by UEs in coverage to UEs out of coverage). In a mode 2, UEs are provided with a resource pool (time and frequency) from which they choose resources for transmitting D2D communication. A UE in mode 2 or transitioning to mode 2 should not automatically default to preconfigured resource pool, as this could lead to significant interference to other in-coverage UEs. In one scenario for example, the UE may be declared RLF but still be in-coverage of the eNB. In this case the UE should not use pre-configured resources, because those may cause interference to other nodes. In another scenario, a UE is itself out-of-coverage, but be in the vicinity of the cell edge. In this case as well, using preconfigured resource pool by this UE could cause interference to uplink transmissions of nearby in-coverage UEs. Alternative ways of receiving resource pool configuration are the following: resource pool can be obtained from dedicated or broadcast messages signaled by the eNB, forwarded from neighboring in-coverage UEs, from neighboring out-of-coverage UE and/or from a pre-configured resource pool. When operating in mode 2, the UE needs to carefully select the resource pool, prioritizing the sources provided the network. A simple procedure may be defined to perform resource pool selection based on explicit prioritized rules as below: 1. Network resources as configured on the SIBs, if available; 2. Resources configured by network obtained through a synchronization message; 3. Resources configured by synchronization head obtained through a synchronization message; 4. Pre-configured resources.

ZTE Corporation: "Resource pools for D2D communication", 3GPP Draft; R2-141483 - Resource pools for D2D communication, 3rd Generation Partnership Project (3GPP), Mobile Competence Centre; 650, Route des Lucioles; F-06921 Sophia-Antipolis Cedex; France, vol. RAN WG2, no. Valencia; 20140331 - 20140404 22 March 2014, XP050792653 is concerned with a discussion on topics related to D2D resource allocation. The transmission resource pool and resource allocation mechanism used for D2D transmitting UE is basically related with the network coverage state. Generally, mode 1 ("scheduled") resource allocation is used when the D2D transmitting UE is in network coverage to enable network control of D2D communication and radio resource, i.e. the serving enB can allocate UE-specific D2D transmission resource for SA and data from the resource pool IN. However, only mode 2 ("autonomous") resource allocation can be used if the D2D transmitting UE is out of network coverage. In that case the D2D UE autonomously chooses transmission resource from the pre-provisioned resource pool OUT.

Qualcom Incorporated: "Definitions of coverage states and mode switching for D2D communication", 3GPP draft; R2-141683 QC_D2D_COVERAGE_MODE, 3rd Generation Partnership Project (3GPP, Mobile Competence Center; 650, Route des Lucioles; F-06921 Sophia-Antipolis Cedex, France, Vol. RAN, WG2, no. Valencia, Spain; 22 March 2014 is related to a discussion and decision on definitions of coverage states and mode switching for D2D communication. Concerning the mechanisms for switching between resource pool for type 1, the following is proposed. In case of out-off coverage to in-coverage, UE switches from pre-configured or SIB forwarded resource pool configuration to SIB configured resource pool. In case of in-coverage to out-off-coverage, UE switches from SIB configured resource pool to pre-configured or SIB forwarded resource pool. Herein, it is proposed that these type 1 transitions (between pre-configured or SIB-forwarded resource pool to SIB configured resource pools) is done based on the UE state transition between in-coverage and out-off-coverage in either direction. Further, type 1 transitions between pre-configured or SIB-forwarded resource pool to SIB configured resource pool are done based on the UE state transition between in-coverage and out-off-coverage in either direction.

The non-patent document (3GPP contribution) by ETRI: "Resource allocation for D2D discovery", 3GPP DRAFT; R1-140852, 17 February 2014 (2014-02-17), XP050770719, discusses about Discovery Resource Region (DRR), i.e. resource allocation for D2D discovery. In the time domain, the parameters include repetition period, number of RBs and offset. The resource configuration may be sent via SIB or via RRC signaling.

## Summary of Invention

It is an object of the present invention to provide multiple resource-pool configurations through different signaling methods and improve spectrum efficiency and robustness of the D2D communication.

This object is solved by the subject-matter of the independent claims. Further advantageous embodiments and refinements of the present invention are described in the respective sub-claims.

The invention is defined by the appended claims. References to embodiments which do not fall under the scope of the claims are to be understood as examples useful for understanding the invention.

## Brief Description of Drawings

[Fig. 1] Fig. 1 shows an illustration of a time domain parameter.

[Fig. 2] Fig. 2 shows an illustration of a frequency domain parameter.

[Fig. 3] Fig. 3 shows an illustration of a frequency domain parameter.

[Fig. 4] Fig. 4 is a flow chart for providing multiple resource-pool configuration.

[Fig. 5] Fig. 5 shows an example of a resource-pool configuration for out-of-coverage UEs.

[Fig. 6] Fig. 6 shows a block diagram of a UE in accordance with preferred embodiments of the present invention.

[Fig. 7] Fig. 7 shows a block diagram of an eNB in accordance with preferred embodiments of the present invention.

**Description of Embodiments**

For the in-coverage UE, an important question that needs to be addressed is whether or not a D2D transmission and uplink transmission from other UEs can be frequency division multiplexed (FDM). The advantage of using FDM mode is to improve the spectrum efficiency, especially if a narrow band D2D communication such as VoIP (Voice over Internet Protocol) is used within a relative large bandwidth. If FDM is not allowed, then significant spectrum resources cannot be utilized. On the other hand, the FDM mode will cause a "near far effect" that can increase the interference level experienced by eNB or D2D receiver. In the following preferred embodiments of the present invention, the FDM mode is considered.

Resource-pool configuration parameters are listed below:

   (i) Time domain:

      $N_T$: the number of consecutive resource blocks (RBs) for D2D communication;
      T: repetition period/cycle length; and
      n (optional): the number of offset RBs within each repetition period/cycle length T. That is, n is the offset between the first normal RB and the first D2D RB within the repetition period/cycle length T. Typically n = 0 such that the first RB in the repetition period/cycle length T is a D2D RB; however, in some circumstances, n will be a different integer that is greater than 0 such that the first n RBs are normal RBs.

   (ii) Frequency domain:

      Option 1 (preferred for out of cell coverage situations):

         $BW_{D2D}$: the resource-pool bandwidth available for D2D communication; and
         k: the number of offset consecutive RBs from the band edge for normal communication. The purpose of k is to fix the D2D RB location, where k is the distance from the first D2D RB to the band edge of the resource-pool bandwidth $BW_{D2D}$. For example, for a band with a 20MHz bandwidth, k indicates the distance from beginning of the band edge to the first D2D RB; and

      Option 2 (preferred for in cell coverage situations):

         $BW_{D2D}$: the resource-pool bandwidth available for D2D communication;
         N: the number of RBs in a segment of the resource-pool bandwidth $BW_{D2D}$ available for both normal and D2D communication;

         K: the number of RBs in each segment for D2D communication; and
         k: the number of offset consecutive RBs from the band edge for normal communication. As noted above, the offset k is to fix the D2D RB location with respect to the band edge of the resource-pool bandwidth $BW_{D2D}$.

The above resource-pool configuration parameters are merely shown as preferred examples used in accordance with preferred embodiments of the present invention and many other types of resource-pool configuration parameters are possible. For example, it is also possible to randomly pick a resource block that is to be used for D2D communication.

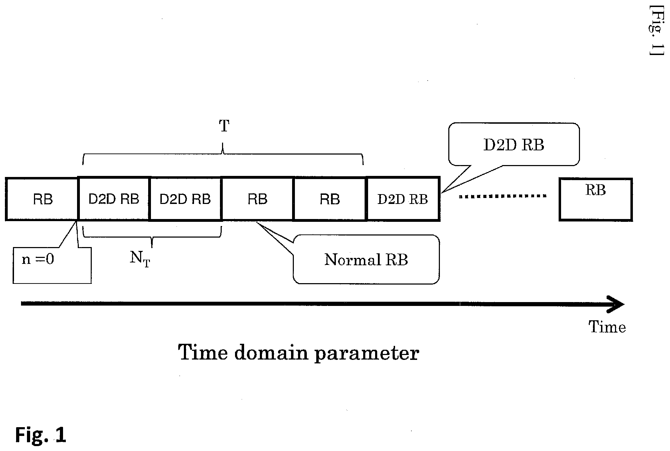

Illustrations of a preferred embodiment of the time domain (TD) and frequency domain (FD) parameters, which do not fall within the scope of the claims, are shown in Figs. 1-3.

In Fig. 1, the repetition period/cycle length T could be, for example, a multiple of 10 subframes (i.e., 10 ms) to make it possible to avoid missing detection on the Physical Broadcast Chanel (PBCH), which will be repeated every 40ms, or could be a multiple of 8 subframes (i.e., 8 ms) to make it possible to avoid collision with the Upload Hybrid Automatic Repeat Request (UL HARQ) process, which is repeated in a time period which is a multiple of 8ms, or to make it possible to reuse the value of Discontinuous Reception (DRX) cycles.

Preferably, the following equation is satisfied:

$$N_T \leq T$$

, where $N_T$ is the number of consecutive RBs for D2D communication and T is the repetition period/cycle length. $N_T$ is only equal to the repetition period/cycle length T on UEs that do not have any intra/inter frequency and inter Radio Access Technology (RAT) coverage. However, in the time domain shown in Fig. 1, the repetition period/ cycle length T is a fixed value such that only the same number of D2D RBs is available for each cycle. For example, in Fig. 1, only 2 RBs are available each repetition period/cycle length T for D2D communication, where the remaining two RBs can be used for general transmission. Accordingly, in the time domain example shown in Fig. 1, the system is only ever able to use 2 RBs for D2D communication regardless of whether or not the remaining two RBs are required for general transmission. Thus, when the two general-transmission RBs are not required, the time domain configuration is not efficient.

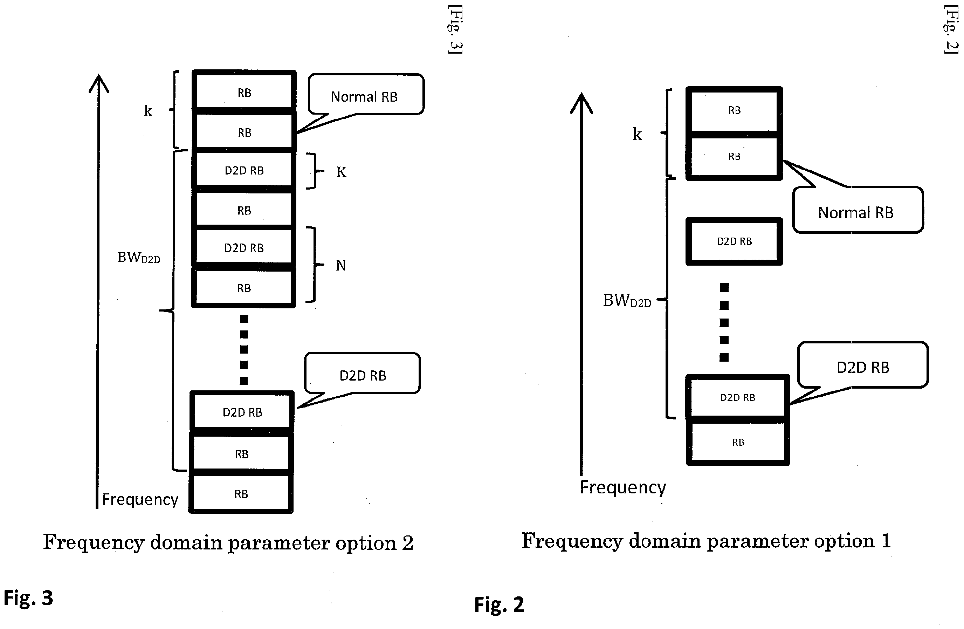

Examples of the parameters in the frequency domain are shown in Figs. 2 and 3. Preferably, the following equation is satisfied:

$$BW_{D2D} \leq DW_{total}$$

, where $BW_{D2D}$ is the resource-pool bandwidth for D2D communication and $BW_{total}$ is the total available bandwidth, and

$$K \leq N \leq BW_{D2D}$$

, where K is the number of RBs within each segment, N is the number of RBs in each segment, and $BW_{D2D}$ is the resource-pool bandwidth.

In using the frequency domain configurations of Figs. 2 and 3, there are many methods which could be used to determine which RBs are allocated to D2D resource pool. Three examples of preferred methods of determining which RBs are allocated to D2D resource pool will now be described. First, the location of the D2D RBs within the bandwidth may be chosen at the eNB and broadcast to UEs connected to the eNB using the system information block (SIB). Second, the location of which blocks to use for the D2D RBs may be fixed in the specifications. Third, the location of the D2D RBs within the bandwidth may be dynamically chosen by the eNB based on which resources are available in the UEs. In this method, different UEs may have different RBs allocated to D2D. This dynamic choosing of the location of the D2D RBs within the bandwidth is preferably controlled by way of Radio Resource Control (RRC) signaling broadcasted by the eNB. The above three examples are merely preferred methods of determining which RBs are allocated to D2D communication resource pool, and it is also possible to used additional methods to make the determinations.

Having two different frequency domain options, an out-of-coverage FD Option 1 shown in Fig. 2 and an in-coverage FD Option 2 shown in Fig. 3, allows the resource-pool configuration to be adaptable such that it is suitable for different scenarios. For the out-of-coverage scenario, it may not be necessary to have any sophisticated resource-pool configuration since an out-of-coverage UE's spectrum efficiency is not a large concern. A simple and robust solution such as Option 1 will reduce the complexity of D2D-communication implementation. For example, reducing the amount of signaling needed for resource/resource-pool allocation improves system throughput/efficiency. However, it should be noted that both of Option 1 and Option 2 could be used simultaneously in some instances, whether in-coverage or out-of-coverage.

Additionally, as mentioned above, the frequency domain parameters in Option 1 of Fig. 2 and the time domain parameters of Fig. 1 can be transmitted through System Information Block (SIB) signaling over the same frequency layer. D2D communication is facilitated when one UE is out of coverage from a particular cell but is still within coverage of the current frequency layer.

The frequency domain parameters of Option 2 of Fig. 3 provide extra flexibility as compared with Option 1 and improve spectrum efficiency by using FDM. In other words, Option 1 tries to allocate a group of RBs for D2D communication, and Option 2 provides more flexibility because the resolution of resource allocation is high, e.g., the resolution could be at the RB level. For example, in using Option 2, it is possible to provide a more complex allocation of resources by multiplexing D2D RBs and other RBs in a same pattern, as shown in Fig. 3

That is, an allocation pattern, in which specific RBs within the bandwidth are chosen for use as D2D RBs, for Option 2 is preferably designed to be optimized for certain circumstances. The corresponding parameters could be semi-static, such that the allocation pattern of the broadcast pattern could be changed slowly, for example, between the TD and FD schemes depicted in Figs. 1-3 over time based on changing circumstances of the resource pool and broadcasted through Radio Resource Control (RRC) signaling at a per cell level. For example, the UE can report an amount of D2D communication which is required, and the eNB can provide more, or reduce an amount, of resources for the D2D communication to improve efficiency of the communications. Further, the UE can decide on its own whether or not to change the parameters of the resources allocated for D2D communications. However, because Option 1 of Fig. 2 and Option 2 of Fig. 3 are preferably used together, a single UE is able to use both Option 1 of Fig. 2 and Option 2 of Fig. 3 and switch between them as necessary, depending upon whether the UE is in coverage or out of coverage.

As mentioned above, different resource-pool configurations are suitable for different scenarios, and the question of how to use the resource-pool configurations to implement D2D communication has still not been finalized in the related art. In accordance with the preferred embodiments of the present invention, a methodology is provided in which various resource-pool configurations are transmitted through different signaling. A D2D-capable UE may select the most suitable resource-pool configuration by overriding an already existing configuration. For example, when an out-of-coverage UE moves into a coverage area, the UE will have a fixed or preconfigured resource-pool configuration and obtains a new allocation through RRC signaling. Then, the UE selects which configuration will be used based on instructions received from the eNB which indicate the priority of a D2D application, or that optionally can use various factors (such as, for example, the amount of D2D data based on a D2D buffer report, etc.) to optimize the resource-pool configuration strategy. Alternatively, in an example which does not fall within the scope of the claims, if there are no network instructions, then the UE can make the decision automatically. On the other hand, an in-coverage UE already has a resource-pool configuration through RRC signaling and re-activates the fixed or preconfigured resource-pool configuration when it moves in-

to an out-of-coverage area.

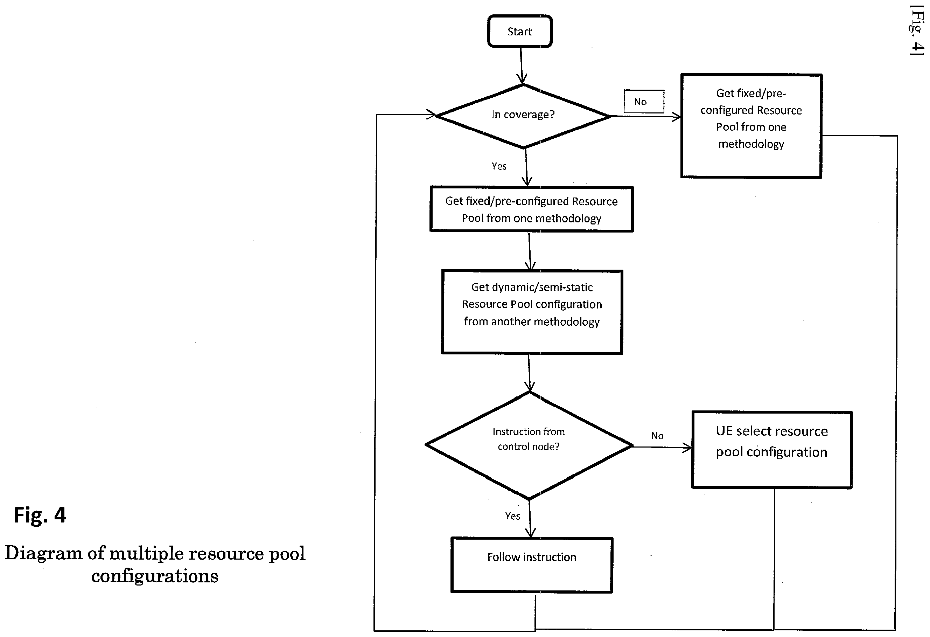

A flow chart explaining a preferred process that the UE will go through, which does not fall within the scope of the claims, is shown in Fig. 4. It should be noted that the same combination is also possible for multiple resource-pool configuration transmissions. For example, two sets of time domain parameters and frequency domain parameters of Option 1 with different values preferably are transmitted to the UE through different signaling methods as well.

One example is transmitting the time domain parameters and the frequency domain parameters of Option 1 through the system information. The same values can be used at the frequency layer level to ensure any D2D-capable UE which is out of coverage of a particular cell but still within the coverage of a frequency layer that has the same resource-pool configuration. This helps inter-cell, intra-frequency D2D communications since the UE performing the D2D transmission from one cell knows at least the resource pool of an inter-cell UE, although they are not within the same cell. Corresponding parameters such as $BW_{D2D}$, $N_T$, and T can be exchanged over an X2 interface, which is a channel between different eNBs within the same frequency layer, or through the information exchanged during a handover procedure from a D2D-capable UE.

For example, the time domain parameters and the frequency domain parameters of Option 1 with different values preferably are simultaneously transmitted using RRC signaling. In general, the size of resource-pool configuration transmitted through RRC signaling could be a subset of the original resource-pool configuration of the system information, i.e., a small value of $N_T$ and $BW_{D2D}$. Alternatively, time domain parameters and the frequency domain parameters of Option 2 preferably is transmitted using RRC signaling simultaneously with the parameters transmitted with the system information. A D2D-capable UE in RRC_CONNECTED state has the most suitable resource-pool configuration for its D2D communication.

During a typical D2D communication, it is common that both in-coverage UEs and out-of-coverage UEs are within the broadcast area. The D2D transmitter can have little information about the status of out-of-coverage UE, thus the resource-pool configuration could be conservative, i.e., with a relative large value of $N_T$ and $BW_{D2D}$ because there is no need to save RBs for non D2D communications due to the fact that the UE is out-of-coverage and does not need RBs for communication which are only necessary when the UE is in coverage. However, if using the same configuration for in-coverage UE, then the frequency-time resources allocated to D2D communications can be quite large and thus will result in the frequency-time resources also being available for normal LTE/LTE-A communication. The resource pool allocated to D2D communication cannot be used for normal WAN communication. Accordingly, by transmitting multiple configurations (either reasonable values for $N_T$ and

$BW_{D2D}$ or more sophisticated frequency domain parameters of Option 2), preferred embodiments of the present invention achieve optimization of resource allocation for D2D transmission and improving spectrum efficiency. That is, by using the frequency domain parameters of Option 1 and Option 2, it is possible to use more RBs as D2D RBs if the RBs are not required by other communications. Thus, unlike with the time domain parameter of Fig. 1, additional available resources can be used for D2D communication.

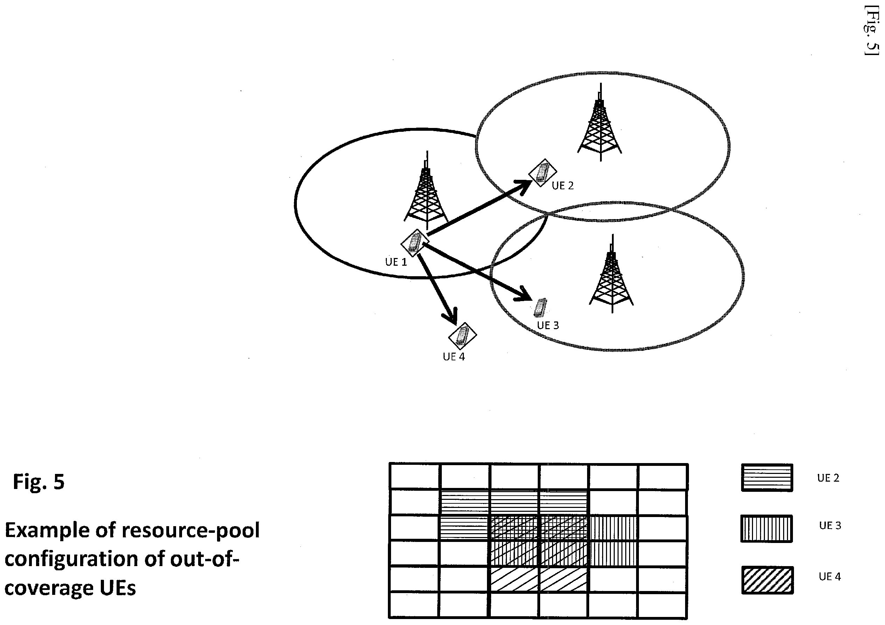

An example of D2D communication, which does not fall within the scope of the claims, is shown in Fig. 5. UE1 broadcasts to UE2, UE3, and UE4 and all of UE2, UE3, and UE4 are out-of-coverage UEs. The resource suitable for UE1 broadcast transmission is only the overlapping portion between the different resource pools, as shown in the chart at the bottom of Fig. 5. Thus, the UE1, UE2, UE3, and UE4 will use only those portions of their corresponding resource pools which overlap for D2D communications, thereby freeing up the remaining nonoverlapping portions of their corresponding resource pools to perform other functions. That is, the allocated inter-cell D2D-communicaton resources must overlap (i.e., be identical to) all the cells in the same frequency level to share resources in the pool. If the resource-pool configuration is not coordinated, a significant amount of available resources within a particular resource pool cannot be utilized (i.e., if the nonoverlapping portions are held for D2D communication, they will be wasted since D2D communication will only work with the overlapping portions of the resource pools). As discussed above, if one identical resource-pool configuration is transmitted over the same frequency layer, at least the D2D resource-pool utilization efficiency, such as UE2 and UE3 in Fig. 5, is improved in the intra-frequency scenario.

Preferred embodiments of the present invention preferably include the following features:

(i) Resource-pool configuration parameters (not falling within the scope of the claims) including:

a. Time domain:

$N_T$: the number of consecutive RBs for D2D communication;
T: repetition rate period/cycle length T; and
offset n: the number of offset RBs (optional) within each repetition period/cycle length T. This offset n is the distance between the first normal RB and the first D2D RBs within the repetition period/cycle length T.

b. Frequency domain; Option 1:

$BW_{D2D}$: the resource-pool bandwidth available for D2D communication; and
k: the number of offset consecutive RBs from the band edge for normal communication. This offset k fixes the D2D RBs location within the resource-pool bandwidth $BW_{D2D}$.

c. The resource-pool configuration includes other concepts such as SA (schedule assignment) resource pool, receiver pool, and transmission resource pool. Schedule assignment is information (typically a pointer) which is sent from an eNB to a UE which indicates a specific block which should be used for a specific purpose.

(ii) Define and transmit multiple resource-pool configurations simultaneously (not falling within the scope of the claims).

(iii) eNB (or the Control node) transmits a first resource-pool configuration using system information and a second resource-pool configuration using RRC signaling. In accordance with preferred embodiments of the present invention, resource pool configuration is preferably controlled using SIB and RRC. It should be noted that it is also possible to use physical and MAC layer signaling to control the resource-pool configuration directly. However, physical and MAC layer signaling are quite detailed and can be more complicated to use than SIB and RRC.

A coordination of resource-pool configuration may be preferably performed. One example of the coordination of resource-pool configuration is to transmit corresponding resource-pool configuration parameters over an X2 interface.

Additionally, D2D-capable UEs may receive multiple resource-pool configurations. Accordingly, a D2D-capable UE selects the suitable configuration from these resource-pool configurations, or a D2D-capable UE always uses the resource-pool configuration transmitted by RRC signaling if it is available.

Examples of UE selection procedure may include:

a. A D2D-capable UE selects either of resource-pool configurations based on Reference Signal Received Power (RSRP) or Reference Signal Received Quality (RSRQ) for a serving cell. RSRP and RSRQ are typically used by a UE to determine whether or not a handover to a different eNB should be performed.
b. A D2D-capable UE always uses the resource-pool configuration transmitted by the RRC signaling, if it is available.

The below correspond to examples of how a UE could choose to configure the first resource pool and the second resource pool for D2D communications between two UEs based on various operating parameters such as, for example, whether the UEs are in-coverage of a eNB or out-of-coverage of an eNB:

a. Alt.A-1: UE transmits D2D SA in the configured resource pool.
b. Alt.A-2: UE transmits and monitors D2D SA in the configured resource pool.
c. Alt.B-1: UE transmits D2D data in the configured resource pool.
d. Alt.B-2: UE transmits and monitors D2D data in the configured resource pool.
e. Alt.C-1 Both Alt.A-1 and Alt.B-1
f. Alt.C-2 Both Alt.A-2 and Alt.B-2

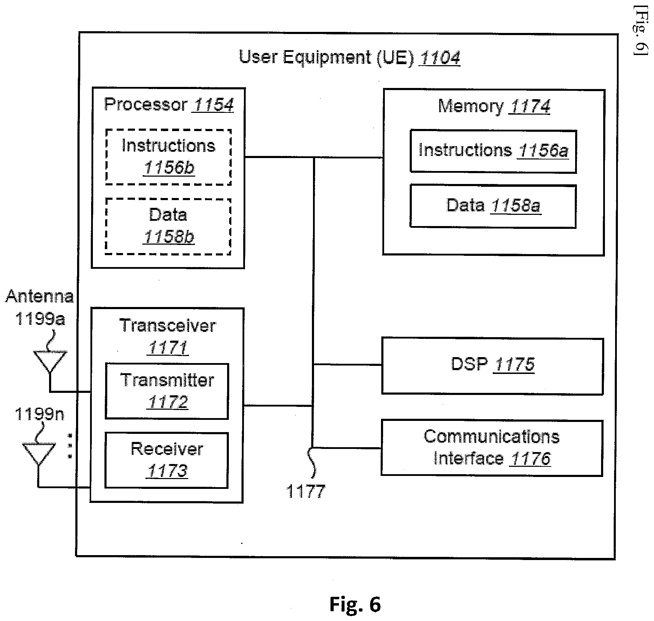

Fig. 6 illustrates various components that can be included in a UE 1104 in accordance with preferred embodiments of the present invention. UE 1104 preferably includes a processor 1154 that is configured and programmed to control an operation of the UE 1104. The processor 1154 can also be a CPU or other similar device. Memory 1174, which can include read-only memory (ROM), random access memory (RAM), or any other device that is preferably used to store information, provides instructions 1156a and data 1158a to the processor 1154. Memory 1174 can also include non-volatile random access memory (NVRAM). Instructions 1156b and data 1158b are used by the processor 1154. Instructions 1156b and/or data 1158b loaded into the processor 1154 also preferably include instructions 1156a and/or data 1158a from memory 1174 that were loaded for execution or processing by the processor 1154. The instructions 1156b are executed by the processor 1154 to implement the systems and methods disclosed in this specification.

UE 1104 preferably also includes a housing that contains a transmitter 1172 and a receiver 1173 which are configured to allow transmission and reception of data. The transmitter 1172 and receiver 1173 can be combined into a transceiver 1171. One or more antennas 1199a-n are preferably attached to or enclosed within the housing and electrically coupled to the transceiver 1171.

The various components of UE 1104 are preferably coupled together by a bus system 1177, which can include a power bus, a control signal bus, and a status signal bus, in addition to a data bus, for example. However, for the sake of clarity, the various buses are illustrated in Fig. 6 as the bus system 1177. UE 1104 can also include a digital signal processor (DSP) 1175 configured and programmed to be used in processing signals. UE 1104 can also include a communications interface 1176 that provides user access to the functions of UE 1104. UE 1104 illustrated in Fig. 6 is a functional block diagram rather than a listing of specific components.

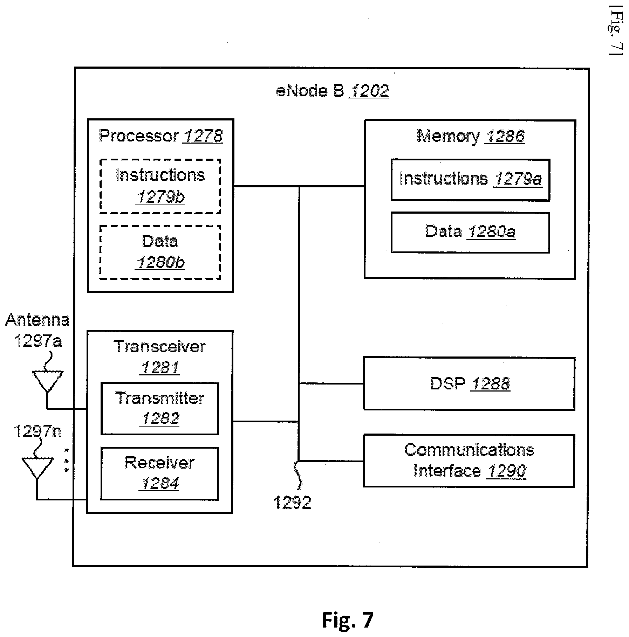

Fig. 7 illustrates various components that may preferably be utilized in an eNB 1202 according to preferred embodiments of the present invention. The eNB 1202 preferably includes components that are similar to the components discussed above in relation to UE 1104, including a processor 1278, memory 1286 that is configured and programmed to provide instructions 1279a and data 1280a to the processor 1278, instructions 1279b and data 1280b that can reside in or be loaded into the processor 1278, a housing that contains a transmitter 1282 and a receiver 1284 (which can be combined into a transceiver 1281), one or more antennas 1297a-n electrically coupled to the transceiver 1281, a bus system 1292, a DSP 1288 for use in processing signals, a communications interface 1290 and so forth.

Unless otherwise noted, the use of '/' above represents the phrase "and/or."

The functions described in this specification can be implemented in hardware, software, firmware, or any combination thereof. If implemented in software, the functions can be stored as one or more instructions on a computer-readable medium. The term "computer-readable medium" refers to any available tangible, non-transitory medium that can be accessed by a computer or a processor. By way of example, and not limitation, a computer-readable or processor-readable medium may comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer or processor. Disk and disc, as used in this specification, includes compact disc (CD), laser disc, optical disc, digital versatile disc (DVD), floppy disk and Blu-ray(registered trademark) disc, where disks usually reproduce data magnetically, while discs reproduce data optically with lasers. If implemented in hardware, the functions described in this specification may be implemented in and/or realized using a chipset, an application-specific integrated circuit (ASIC), a large-scale integrated circuit (LSI), an integrated circuit, etc.

Each of the methods disclosed in this specification includes one or more steps or actions for achieving the described method. The method steps and/or actions may be interchanged with one another and/or combined into a single step without departing from the scope of the present invention. In other words, unless a specific order of steps or actions is required for proper operation of the method that is being described, the order and/or use of specific steps and/or actions may be modified without departing from the scope of the claims.

The term "processor" should be interpreted broadly to encompass a general purpose processor, a central processing unit (CPU), a microprocessor, a digital signal processor (DSP), a controller, a microcontroller, a state machine and so forth. Under some circumstances, a "processor" may refer to an application specific integrated circuit (ASIC), a programmable logic device (PLD), a field programmable gate array (FPGA), etc. The term "processor" may refer to a combination of processing devices, e.g., a combination of a DSP and a microprocessor, a plurality of microprocessors, one or more microprocessors in conjunction with a DSP core or any other such configuration.

The term "memory" should be interpreted broadly to encompass any electronic component capable of storing electronic information. The term "memory" may refer to various types of processor-readable media such as random access memory (RAM), read-only memory (ROM), non-volatile random access memory (NVRAM), programmable read-only memory (PROM), erasable programmable read-only memory (EPROM), electrically erasable PROM (EEPROM), flash memory, magnetic or optical data storage, registers, etc. Memory is said to be in electronic communication with a processor if the processor can read information from and/or write information to the memory. Memory may be integral with a processor and still be said to be in electronic communication with the processor.

The terms "instructions" and "code" should be interpreted broadly to include any type of computer-readable statement(s). For example, the terms "instructions" and "code" may refer to one or more programs, routines, sub-routines, functions, procedures, etc. "Instructions" and "code" may include a single computer-readable statement or many computer-readable statements.

**Claims**

1. A method carried out by a base station (1202) for configuring and allocating radio resource to terminals (1104) for device to device, D2D, communication or discovery, comprising:

   transmitting configurations to each of the terminals (1104), each of the configurations being a configuration of a corresponding one of multiple resource pools, one of the configurations being used by the terminal (1104) during device to device communication, the configurations differing from each other, the configurations being transmitted by respective different methods, the configuration of each of the multiple resource pools including parameters corresponding to the each of the multiple resource pools,
   wherein a first configuration is transmitted using System Information Block, SIB and a second configuration is transmitted using Radio Resource Control, RRC, Signaling, **characterized in**
   transmitting an instruction to the terminals (1104) indicating a priority for selecting one of the first configuration and the second configuration.

2. A method carried out by a terminal (1104) to which radio resource for device to device, D2D, communication or discovery is configured and allocated, comprising:

   receiving configurations from a base station (1202), each of the configurations being a configuration of a corresponding one of multiple resource pools, one of the configurations being used by the terminal (1104) during device to device communication, the configurations differing from each other, the configurations being received by respective different methods, the configuration of each of the multiple resource pools including parameters corresponding to the each of the multiple resource pools; and

selecting a suitable resource pool configuration for device to device operation, wherein a first configuration is received through System Information Block, SIB and a second configuration is received through Radio Resource Control, RRC, Signaling, **characterized in that**

the terminal (1104) selects which configuration will be used based on priority received from the base station (1202).

3. A base station (1202) for configuring and allocating radio resource to terminals (1104) for device to device, D2D, communication or discovery, comprising:

a processor;
memory in electronic communication with the processor, wherein instructions stored in the memory are executable to:

transmit configurations to each of the terminals (1104), each of the configurations being a configuration of a corresponding one of multiple resource pools, one of the configurations being used by the terminal (1104) during device to device communication, the configurations differing from each other, the configurations being transmitted by respective different methods, the configuration of each of the multiple resource pools including parameters corresponding to the each of the multiple resource pools, wherein a first configuration is transmitted using System Information Block, SIB and a second configuration is transmitted using Radio Resource Control, RRC, Signaling, **characterized in that** the instructions stored in the memory are further executable to:
transmit an instruction to the terminals (1104) indicating a priority for selecting one of the first configuration and the second configuration.

4. A terminal (1104) to which radio resource for device to device, D2D, communication or discovery is configured and allocated, comprising:

a processor;
memory in electronic communication with the processor, wherein instructions stored in the memory are executable to:

receive configurations from a base station (1202), each of the configurations being a configuration of a corresponding one of multiple resource pools, one of the configurations being used by the terminal (1104) during device to device communication, the configurations differing from each other, the configurations being received by respective different methods, the configuration of each of the multiple resource pools including parameters corresponding to the each of the multiple resource pools; and
select a suitable resource pool configuration for device to device operation, wherein a first configuration is received through System Information Block, SIB and a second configuration is received through Radio Resource Control, RRC, Signaling, **characterized in that** the instructions stored in the memory are further executable to:
select which configuration will be used based on priority received from the base station (1202).

**Patentansprüche**

1. Verfahren, das von einer Basisstation (1202) ausgeführt wird, um eine Funkressource für Endgeräte (1104) für eine Kommunikation von Vorrichtung zu Vorrichtung, D2D, oder Entdeckung zu konfigurieren und zuzuweisen, aufweisend:

ein Übertragen von Konfigurationen zu jedem der Endgeräte (1104), wobei jede der Konfigurationen eine Konfiguration eines entsprechenden von mehreren Ressourcenpools ist, eine der Konfigurationen von dem Endgerät (1104) während einer Kommunikation von Vorrichtung zu Vorrichtung verwendet wird, sich die Konfigurationen voneinander unterscheiden, die Konfigurationen mittels jeweiliger verschiedener Verfahren übertragen werden, die Konfiguration jedes der mehreren Ressourcenpools Parameter enthält, die jedem der mehreren Ressourcenpools entsprechen,
wobei eine erste Konfiguration unter Verwendung eines Systeminformationsblocks, SIB, übertragen wird und eine zweite Konfiguration unter Verwendung einer Signalisierung einer Funkressourcensteuerung, RRC, übertragen wird,
**gekennzeichnet durch**
ein Übertragen einer Anweisung an die Endgeräte (1104), die eine Priorität zum Auswählen einer der ersten Konfiguration und der zweiten Konfiguration angibt.

2. Verfahren, das von einem Endgerät (1104) ausgeführt wird, für das eine Funkressource für eine Kommunikation von Vorrichtung zu Vorrichtung, D2D, oder Entdeckung konfiguriert und zugewiesen wird, aufweisend:

ein Empfangen von Konfigurationen von einer Basisstation (1202), wobei jede der Konfigurationen eine Konfiguration eines entsprechenden von mehreren Ressourcenpools ist, eine der Konfigurationen von dem Endgerät (1104) während einer Kommunikation von Vorrichtung zu Vorrichtung verwendet wird, sich die Konfigurationen voneinander unterscheiden, die Konfigurationen mittels jeweiliger verschiedener Verfahren empfangen werden, die Konfiguration jedes der mehreren Ressourcenpools Parameter enthält, die jedem der mehreren Ressourcenpools entsprechen; und
ein Auswählen einer geeigneten Ressourcenpool-Konfiguration für einen Betrieb von Vorrichtung zu Vorrichtung,
wobei eine erste Konfiguration über einen Systeminformationsblock, SIB, empfangen wird und eine zweite Konfiguration über eine Signalisierung einer Funkressourcensteuerung, RRC, empfangen wird,
**dadurch gekennzeichnet, dass**
das Endgerät (1104) basierend auf einer von der Basisstation (1202) empfangenen Priorität auswählt, welche Konfiguration verwendet wird.

3. Basisstation (1202), um eine Funkressource für Endgeräte (1104) für eine Kommunikation von Vorrichtung zu Vorrichtung, D2D, oder Entdeckung zu konfigurieren und zuzuweisen, aufweisend:

einen Prozessor;
einen Speicher in elektronischer Verbindung mit dem Prozessor, wobei im Speicher gespeicherte Anweisungen ausführbar sind, um:

Konfigurationen zu jedem der Endgeräte (1104) zu übertragen, wobei jede der Konfigurationen eine Konfiguration eines entsprechenden von mehreren Ressourcenpools ist, eine der Konfigurationen von dem Endgerät (1104) während einer Kommunikation von Vorrichtung zu Vorrichtung verwendet wird, sich die Konfigurationen voneinander unterscheiden, die Konfigurationen mittels jeweiliger verschiedener Verfahren übertragen werden, die Konfiguration jedes der mehreren Ressourcenpools Parameter enthält, die jedem der mehreren Ressourcenpools entsprechen,
wobei eine erste Konfiguration unter Verwendung eines Systeminformationsblocks, SIB, übertragen wird und eine zweite Konfiguration unter Verwendung einer Signalisierung einer Funkressourcensteuerung, RRC, übertragen wird,
**dadurch gekennzeichnet, dass**
die im Speicher gespeicherten Anweisungen ferner ausführbar sind, um:
eine Anweisung an die Endgeräte (1104) zu übertragen, die eine Priorität zum Auswählen einer der ersten Konfiguration und der zweiten Konfiguration angibt.

4. Endgerät (1104), für das eine Funkressource für eine Kommunikation von Vorrichtung zu Vorrichtung, D2D, oder Entdeckung konfiguriert und zugewiesen wird, aufweisend:

einen Prozessor;
einen Speicher in elektronischer Verbindung mit dem Prozessor, wobei im Speicher gespeicherte Anweisungen ausführbar sind, um:

Konfigurationen von einer Basisstation (1202) zu empfangen, wobei jede der Konfigurationen eine Konfiguration eines entsprechenden von mehreren Ressourcenpools ist, eine der Konfigurationen von dem Endgerät (1104) während einer Kommunikation von Vorrichtung zu Vorrichtung verwendet wird, sich die Konfigurationen voneinander unterscheiden, die Konfigurationen mittels jeweiliger verschiedener Verfahren empfangen werden, die Konfiguration jedes der mehreren Ressourcenpools Parameter enthält, die jedem der mehreren Ressourcenpools entsprechen; und
eine geeignete Ressourcenpool-Konfiguration für einen Betrieb von Vorrichtung zu Vorrichtung auszuwählen,
wobei eine erste Konfiguration über einen Systeminformationsblock, SIB, empfangen wird und eine zweite Konfiguration über eine Signalisierung einer Funkressourcensteuerung, RRC, empfangen wird,
**dadurch gekennzeichnet, dass**
die im Speicher gespeicherten Anweisungen ferner ausführbar sind, um:
basierend auf einer von der Basisstation (1202) empfangenen Priorität auszuwählen, welche Konfiguration verwendet wird.

**Revendications**

1. Procédé réalisé par une station de base (1202) pour configurer et attribuer une ressource radio à des terminaux (1104) pour une communication ou une découverte de dispositif à dispositif, D2D, comprenant l'étape de :

transmettre des configurations à chacun des terminaux (1104), chacune des configurations étant une configuration de l'un de multiples groupes de ressources correspondant, une des configurations étant utilisée par le terminal (1104) durant une communication de dispositif à dispositif, les configurations différant l'une de l'autre, les configurations étant transmises par des procédés différents respectifs, la configuration de chacun des multiples groupes de ressources comportant des paramètres correspondant à chacun des multiples groupes de ressources, dans lequel une première configuration est transmise en utilisant un bloc d'informations de système, SIB, et une seconde configuration est transmise en utilisant une signalisation de commande de ressource radio, RRC,
**caractérisé par** l'étape de :
transmettre une instruction aux terminaux (1104) indiquant une priorité pour la sélection d'une parmi la première configuration et la seconde configuration.

2. Procédé réalisé par un terminal (1104) pour lequel une ressource radio pour une communication ou une découverte de dispositif à dispositif, D2D, est configurée et auquel elle est attribuée, comprenant les étapes de :

réceptionner des configurations à partir d'une station de base (1202), chacune des configurations étant une configuration de l'un de multiples groupes de ressources correspondant, une des configurations étant utilisée par le terminal (1104) durant une communication de dispositif à dispositif, les configurations différant l'une de l'autre, les configurations étant reçues par des procédés différents respectifs, la configuration de chacun des multiples groupes de ressources comportant des paramètres correspondant à chacun des multiples groupes de ressources ; et
sélectionner une configuration de groupe de ressources appropriée pour une opération de dispositif à dispositif,
dans lequel une première configuration est reçue en utilisant un bloc d'informations de système, SIB, et une seconde configuration est reçue en utilisant une signalisation de commande de ressource radio, RRC,
**caractérisé en ce que**
le terminal (1104) sélectionne la configuration qui sera utilisée sur la base d'une priorité reçue à partir de la station de base (1202).

3. Station de base (1202) pour la configuration et l'attribution d'une ressource radio à des terminaux (1104) pour une communication ou une découverte de dispositif à dispositif, D2D, comprenant :

un processeur ;
une mémoire en communication électronique avec le processeur, dans laquelle des instructions stockées dans la mémoire sont exécutables pour :

transmettre des configurations à chacun des terminaux (1104), chacune des configurations étant une configuration de l'un de multiples groupes de ressources correspondant, une des configurations étant utilisée par le terminal (1104) durant une communication de dispositif à dispositif, les configurations différant l'une de l'autre, les configurations étant transmises par des procédés différents respectifs, la configuration de chacun des multiples groupes de ressources comportant des paramètres correspondant à chacun des multiples groupes de ressources,
dans laquelle une première configuration est transmise en utilisant un bloc d'informations de système, SIB, et une seconde configuration est transmise en utilisant une signalisation de commande de ressource radio, RRC,
**caractérisée en ce que** les instructions stockées dans la mémoire sont exécutables en outre pour :
transmettre une instruction aux terminaux (1104) indiquant une priorité pour la sélection d'une parmi la première configuration et la seconde configuration.

4. Terminal (1104) pour lequel une ressource radio pour une communication ou une découverte de dispositif à dispositif, D2D, est configurée et auquel elle est attribuée, comprenant :

un processeur ;
une mémoire en communication électronique avec le processeur, dans lequel des instructions stockées dans la mémoire sont exécutables pour :

recevoir des configurations à partir d'une station de base (1202), chacune des configurations étant une configuration de l'un de multiples groupes de ressources correspondant, une des configurations étant utilisée par le terminal (1104) durant une communication de dispositif à dispositif, les configurations différant l'une de l'autre, les configurations étant reçues par des procédés différents respectifs, la configuration de chacun des multiples groupes de ressources comportant des paramètres correspondant à chacun des multiples groupes de ressources ; et

sélectionner une configuration de groupe de ressources appropriée pour une opération de dispositif à dispositif,

dans lequel une première configuration est reçue en utilisant un bloc d'informations de système, SIB, et une seconde configuration est reçue en utilisant une signalisation de commande de ressource radio, RRC,

**caractérisé en ce que** les instructions stockées dans la mémoire sont exécutables en outre pour :

sélectionner la configuration qui sera utilisée sur la base d'une priorité reçue à partir de la station de base (1202).

[Fig. 1]

EP 3 138 361 B1

Fig. 1

[Fig. 2]

Frequency domain parameter option 1

Fig. 2

[Fig. 3]

Frequency domain parameter option 2

Fig. 3

[Fig. 4]

**Fig. 4**

Diagram of multiple resource pool configurations

[Fig. 5]

EP 3 138 361 B1

**Fig. 5**

**Example of resource-pool configuration of out-of-coverage UEs**

[Fig. 6]

User Equipment (UE) 1104

Memory 1174
Instructions 1156a
Data 1158a

DSP 1175

Communications Interface 1176

Processor 1154
Instructions 1156b
Data 1158b

Transceiver 1171
Transmitter 1172
Receiver 1173

1177

Antenna 1199a
1199n

Fig. 6

[Fig. 7]

EP 3 138 361 B1

**Fig. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **INTERDIGITAL COMMUNICATIONS.** Mode selection and resource pool selection for D2D UEs. *3GPP Draft; R2-141695 Mode selection and resource pool selection, 3rd Generation Partnership Project (3GPP), Mobile Competence Centre; 650, Route des Lucioles; F-06921 Sophia-Antipolis Cedex; France,* 22 March 2014, vol. RAN WG2
- **ZTE CORPORATION.** Resource pools for D2D communication. *3GPP Draft; R2-141483 - Resource pools for D2D communication, 3rd Generation Partnership Project (3GPP), Mobile Competence Centre; 650, Route des Lucioles; F-06921 Sophia-Antipolis Cedex; France,* 22 March 2014, vol. RAN WG2
- **QUALCOM INCORPORATED.** Definitions of coverage states and mode switching for D2D communication. *3GPP draft; R2-141683 QC_D2D_COVERAGE_MODE, 3rd Generation Partnership Project (3GPP, Mobile Competence Center; 650, Route des Lucioles; F-06921 Sophia-Antipolis Cedex, France,* 22 March 2014, vol. RAN, WG2
- **ETRI.** Resource allocation for D2D discovery. *3GPP DRAFT; R1-140852,* 17 February 2014